# EUROPEAN PATENT SPECIFICATION

(11) **EP 1 867 239 B1**
(45) Date of publication and mention of the grant of the patent: **29.06.2016**
(21) Application number: 06728755.7
(22) Date of filing: 08.03.2006
(51) Int. Cl.: A23L 29/20, A23L 27/60, A23L 29/269

(54) **THICKENING COMPOSITION IMPROVED IN VISCOSITY MANIFESTATION**
VERDICKUNGSZUSAMMENSETZUNG MIT VERBESSERTER VISKOSITÄT
COMPOSITION EPAISSISSANTE DE VISCOSITE APPARENTE AMELIOREE

(30) Priority: 11.03.2005 JP 2005069114
(43) Date of publication of application: 19.12.2007
(73) Proprietor: Taiyokagaku Co., Ltd., Yokkaichi-shi, Mie 510-0825 (JP)
(72) Inventor: SEKO, Yoshinori, Yokkaichi-shi Mie 510-0825 (JP); KIMURA, Tomohiro, Yokkaichi-shi Mie 510-0825 (JP); NISHIKAWA, Shuji, Yokkaichi-shi Mie 510-0825 (JP)
(74) Representative: Chautard, Cécile
(86) International application number: PCT/JP2006/304436
(87) International publication number: WO 2006/095756

(56) References cited:
- EP-A1- 0 602 990
- EP-A1- 0 937 410
- WO-A1-2004/096906
- JP-A- 05 299 556
- JP-A- 10 108 633
- JP-A- 10 204 408
- JP-A- 2001 172 395
- JP-A- 2001 275 584
- US-A- 3 804 951
- US-A- 4 487 866
- US-A- 5 728 825

## Description

### Technical Field

The invention relates to a thickening composition that can easily produce viscosity when added to a water-containing desired material, and particularly relates to a thickening composition with improved viscosity-producing properties that is suitable for use in thickening food products such as soft drinks, dips, sauces, dressings, soups, mousses, and jellies or suitable for use in producing viscosity with a small amount added to meals or the like for patients having difficulty in chewing or swallowing due to eating disorders.

### Background Art

US3804951 discloses an egg extender composition which comprises the interrupted aqueous gel product containing kappa carrageenan, xanthan gum, locust gum and potassium salt. This product is produced by the process comprising rapidly cooling with agitation through a temperature range at which gelation will take place an aqueous mixture of kappa carrageenan, xanthan gum, locust gum and potassium salt.

WO2004/096906 discloses a composition comprising water, a first anionic polymer and a second anionic polymer, the polymers being such that on admixture of the composition with further water a diluted composition of increased viscosity is produced. The first anionic polymer is xanthan. In an alternative embodiment the second anionic polymer is a polyacrylate, preferably an alkali metal salt, especially sodium. Suitable as an additional salt is an alkali metal halide, for example sodium chloride or potassium chloride, or an alkali metal phosphate, for example sodium or potassium phosphate or an alkali metal bicarbonate, for example sodium bicarbonate or potassium bicarbonate.

JP10204408 discloses a composition comprising xanthan gum and a potassium salt, which is use as thickening composition.

Xanthan gum is soluble in cold water, and the resulting solution exhibits strong pseudoplastic viscosity. The solution seems to form a weak network like a gel and therefore has excellent dispersing and emulsion-stabilizing properties for insoluble solids or fats and oils at relatively low viscosity. Xanthan gum also has good resistance to heat, acids, and freezing. For different types of high resistance, xanthan gum is used in various fields such as foods, cosmetics and pharmaceuticals.

In order to effectively use xanthan gum, it is first necessary to completely hydrate the xanthan gum. Only when it is completely hydrated, viscosity can be produced. When general users or the like use xanthan gum for food products and the like, xanthan gum powder can easily form so-called "aggregates" (a state in which only the surface of xanthan gum powder is dissolved and the inner part of the powder remains undissolved. The xanthan gum aggregates are insufficiently hydrated and tend to have a state in which its function cannot be performed.

When xanthan gum is hydrated, the viscosity development speed tends to increase with decreasing the particle size of xanthan gum and tends to decrease with increasing the particle size. Smaller-sized xanthan gum particles provide a larger surface area and tend to significantly form aggregates when dispersed in water, and thus require a dispersing or dissolving device or the like for complete hydration. Therefore, difficulties are associated with ensuring the dispersion and dissolution of xanthan gum.

Known conventional techniques for dispersing and dissolving xanthan gum in water include a technique in which xanthan gum is dispersed in ethanol and then dispersed and dissolved in the desired material such as water and a method in which xanthan gum is vigorously stirred with a stirring or dissolving device such as a disper such that it can be dissolved without forming aggregates. These methods, which are for industrial use, require a certain level of skill and are difficult to perform under domestic or other circumstances with no such equipment.

There is also disclosed a technique that includes using a water-soluble polysaccharide and an emulsifying agent for a binder solution and using the binder solution for granulation so that the solubility is improved (for example, see Patent Literature 1 below). In this method, however, aggregates can form depending on the feeding method, and the dissolution process is not always easy. There has been a demand for a composition that can be more easily dispersed and dissolved and quickly achieve the desired viscosity.

Patent Literature 1: Japanese Patent No. 3186737

### Disclosure of Invention

### Objects to be Achieved by the Invention

Thus, there has been a demand for a composition that is prevented from forming aggregates like the conventional powder and can quickly achieve the desired viscosity. Such properties are strongly demanded particularly when xanthan gum is used to thicken care meals or training meals for persons with difficulty in chewing or swallowing. It is an object of the invention to provide a thickening composition that can quickly develop viscosity when added in a small amount to a water-containing desired material and can significantly reduce the user's working time.

### Means for Solving the Problems

In light of such circumstances, the inventors have made active investigations to improve the viscosity-producing properties and solubility of xanthan gum. As a result, the inventors have focused on the fact that when xanthan gum is dissolved, the solubility is reduced depending on the concentration of salts, and have found that when a potassium salt is allowed to bind to the surface of xanthan gum, for example, by spraying and drying a potassium chloride solution, only the surface of xanthan gum is modified to have reduced solubility so that the dispersibility of the xanthan gum in water can be significantly increased and that the xanthan gum dispersed in water can quickly develop viscosity. This necessarily requires the binding of a potassium salt to the xanthan gum surface. The process of simply mixing xanthan gum and potassium salt powder is not effective in improving the viscosity-producing properties.

### Effects of the Invention

When a potassium salt is allowed to bind to the surface of xanthan gum powder, the water wettability of the xanthan gum surface is improved so that the dispersibility in water can be significantly improved and that the speed at which the peak viscosity is achieved can be significantly increased.

### Best Mode for Carrying Out the Invention

Xanthan gum and a potassium salt permitted as food additives may be used in the invention.

In the invention, xanthan gum refers to a natural gum substance which is produced by purifying polysaccharides produced by the microbe Xanthomonas campestris fermentation of glucose and the like and accumulated extracellularly and preparing a powder of the polysaccharides.

In the invention, the potassium salt may be any potassium salt generally used for food products and may be at least one selected from the group consisting of potassium chloride, monopotassium citrate, tripotassium citrate, potassium hydrogen DL-tartrate, potassium hydrogen L-tartrate, potassium carbonate, tetrapotassium pyrophosphate, potassium polyphosphate, potassium metaphosphate, tripotassium phosphate, dipotassium hydrogen phosphate, and potassium dihydrogen phosphate. In terms of further increasing the solubility, potassium chloride is preferred.

In the invention, the binding refers to the binding state of potassium salt particles on the surface of the xanthan gum particles and includes a state in which potassium salt particles bind, in the form of a crystal, to the surface of the xanthan gum particles, specifically, a state in which the potassium salt serves as a binder or a coating agent and binds to the xanthan gum surface. More specifically, the binding refers to a state in which the binding to the particles remains even when the particles are vibrated on a 60-mesh screen for 30 seconds. Fine powder that is formed by vibration-induced disintegration and passes through the 60-mesh screen is preferably at most 20% by weight, more preferably at most 15% by weight, still more preferably at most 10% by weight. In general, xanthan gum power and potassium chloride powder each have particle sizes of less than 60 mesh. Thus, if xanthan gum powder and potassium chloride powder are simply mixed and then the resulting powder mixture is sifted through the 60-mesh screen, 100% of the powder theoretically passes through the screen.

The binding may be achieved by any method. Examples of the method for the binding include a method that includes moisturizing xanthan gum and potassium salt particles to allow them to bind to each other and drying them and a method that includes uniformly spraying a potassium salt solution on xanthan gum powder and drying them. Preferably, a potassium salt solution is sprayed on xanthan gum and then subjected to fluidized drying, so that the potassium salt can be allowed to bind to the surface of the xanthan gum particles and that the binding of the potassium salt to the xanthan gum can be uniform. While the fluidized drying may be performed by any method, it is preferred that an aqueous 1 to 10% by weight solution of potassium chloride should be sprayed as a binder and then subjected to fluidized drying. With respect to the amount of the binding potassium salt, preferably 0.5 to 7 parts by weight of the potassium salt, more preferably 1 to 7 parts by weight of the potassium salt binds to 100 parts by weight of xanthan gum. An amount of more than 7 parts by weight is not preferred, because such an amount can lead to an increase in the hygroscopicity of the particles so that the development of viscosity can be slow. An amount of less than 0.5 parts by weight is not preferred, because such an amount of the potassium salt can provide a small amount of binding so that the development of viscosity cannot be accelerated.

In the invention, the peak viscosity refers to a viscosity value that is attained when xanthan gum is dispersed and dissolved in an ideal state. Specifically, when a certain amount of xanthan gum is dispersed and dissolved in a certain amount of water, it is observed that the viscosity tends to increase over time from immediately after the addition of the xanthan gum to the water, but the increase stops after a certain period of time, and the viscosity at that time is defined as the peak viscosity. For example, 1 g of xanthan gum is added to 99 g of water at 20°C and stirred for a certain time period (for 30 seconds, at 600 r/min), so that the viscosity starts to increase and is stabilized at a certain constant value after about 30 minutes. This viscosity is called the peak viscosity. When the potassium salt-binding xanthan gum is used according to the invention, the time period required to reach at least 90% of the peak viscosity can be at most 2 minutes after the addition, and thus the working time actually required for the user to prepare a thickener by hand stirring can be significantly reduced, as compared with a case where xanthan gum granules with no surface treatment are used, with which the time period required to reach at least 90% of the peak viscosity is at least 10 minutes. If the potassium salt-binding xanthan gum is compared with the xanthan gum granules with no surface treatment, rapid development of viscosity can be actually experienced because the former can be dispersed and dissolved without forming aggregates.

The thickening composition of the invention may have any composition, as long as it contains xanthan gum modified with the binding potassium salt. For example, however, at least one selected from guar gum, enzymatically decomposed guar gum, carrageenan, karaya gum, sodium CMC, sodium alginate, modified starch, and dextrin may also be used. While any type of dextrin may be used, DE (Dextrose Equivalent) is preferably from 6 to 30, more preferably from 6 to 25, in view of dispersibility.

The invention is more specifically described by showing the examples below, which are not intended to limit the scope of the invention.

### Example 1

### <Preparation of Binder Solution>

Five g of potassium chloride was stirred and dissolved in 95 g of ion exchanged water at 50°C.

### <Spray Process>

A hundred g of xanthan gum was maintained in a fluidized state, and 50 g of the potassium chloride solution was sprayed thereon. After the spray was completed, the resulting granules were fluidized and dried to give 94.3 g of a xanthan gum composition. A vessel with a volume of 100 ml was filled with the composition to the full level, and the weight of the deposited granules was measured. The weight of the granules was 41 g, and the bulk specific gravity was 0.41 g/ml. On a 60-mesh JIS standard screen with an inner diameter of 150 mm, 20 g of the resulting granules were vibrated for 30 seconds (OCTAGON 200 Model, Kabushiki Kaisha Iida-Seisakusho, a vibration width of 2 to 3 mm, 3600 times/minute) so that the degree of the particle binding was determined. As a result, out of the 20 g, 2.04 g of powder passed through the 60-mesh screen, and thus the content of xanthan gum and potassium chloride with a low binding degree was 10.2% by weight. It was demonstrated that the remaining 89.8% was in a biding state. The granules after the fluidized drying, the granules remaining on the 60-mesh screen, and the powder passing through the 60-mesh screen were each measured for potassium content per 100 g by atomic absorption spectrometry. As a result, the granules after the fluidized drying, the granules remaining on the 60-mesh screen, and the powder passing through the 60-mesh screen contained 1600 mg, 1600 mg, and 1600 mg of potassium, respectively, so that it was demonstrated that the potassium uniformly bound in the xanthan gum composition.

### Comparative Example 1

A comparative product was prepared similarly to Example 1, except that ion exchanged water was used in place of the potassium chloride solution.

### <Spray Process>

A hundred g of xanthan gum and 2.5 g of potassium chloride powder (the same amount as in Example 1) were maintained in a fluidized state, and 50 g of ion exchanged water was sprayed thereon. After the spray was completed, the resulting granules were fluidized and dried to give 92 g of a xanthan gum composition. A vessel with a volume of 100 ml was filled with the composition to the full level, and the weight of the deposited granules was measured. The weight of the granules was 45 g, and the bulk specific gravity was 0.45 g/ml. The binding degree of 20g of the resulting granules was determined in the same manner as in Example 1. As a result, out of the 20 g, 4.18 g of powder passed through the 60-mesh screen, and the content of xanthan gum and potassium chloride with a low binding degree was 20.9% by weight. The granules after the fluidized drying, the granules remaining on the 60-mesh screen, and the powder passing through the 60-mesh screen were each measured for potassium content per 100 g by atomic absorption spectrometry in the same manner as in Example 1. As a result, the granules after the fluidized drying, the granules remaining on the 60-mesh screen, and the powder passing through the 60-mesh screen contained 1600 mg, 1400 mg, and 2500 mg of potassium, respectively. The potassium did not uniformly bound in the xanthan gum composition, and it was demonstrated that the weakly binding potassium chloride excessively passed through the 60-mesh screen.

### Test Example 1

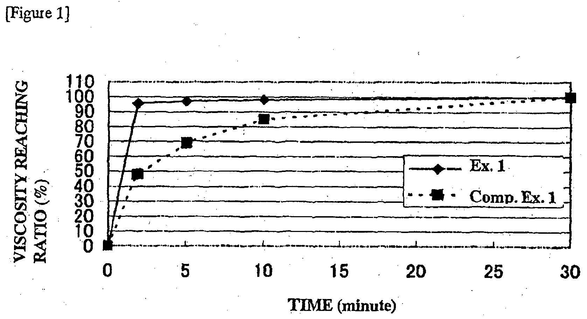

Using a low-revolving disper (manufactured by Tokushu Kika Kogyo Co., Ltd.), 1 g of the granules obtained in Example 1 or Comparative Example 1 was added at a time to 99 g of ion exchanged water at 20°C with stirring at 600 r/min and stirred for 30 seconds. The mixture was then allowed to stand and measured for viscosity after 2, 5, 10, and 30 minutes with a B-type viscometer (manufactured by Tokyo Keiki, at a rotational speed of 12 r/min, with No. 3 rotor after 30 seconds). The viscosity measured after 30 minutes was normalized as 100%, and the results of the measurement were expressed as viscosity achievement rate percentages according to the formula: (measurement/ viscosity after 30 minutes) x 100. With respect to Example 1 and Comparative Example 1, the results of the measurement are shown in Table 1, and the viscosity achievement rates are shown in Fig. 1.

**Table 1**

| | | | | | |
|---|---|---|---|---|---|
| Time (minutes) | | | | | |
| Example 1 | | | | | |
| Comparative Example 1 | | | | | |

In Example 1, the degree of binding between xanthan gum and potassium chloride was high, and the surface of the xanthan gum powder was modified at a high rate, so that the product had good dispersibility in water and was uniformly dispersed and dissolved in water and quickly developed viscosity without forming aggregates, even under weak stirring conditions. In Comparative Example 1, the binding degree of potassium chloride was low, and the surface of the xanthan gum powder was modified at a low rate, so that the product had poor dispersibility and formed aggregates under stirring and barely achieved the peak viscosity after 30 minutes.

### Test Example 2

### Example of Use in Food Product

The xanthan gum granules prepared in Example 1 were used to form a French dressing according to the formulation shown in Table 2. Different materials were simply mixed so that viscosity was developed and stabilized quickly after the mixing. Even after 30 minutes, no change in viscosity was observed.

**Table 2**

| | |
|---|---|
| Example 1 | |
| Vegetable Oil | |
| Water | |
| Granulated Sugar | |
| Vinegar | |
| Table Salt | |
| Powdered Garlic | |
| Powdered Mustard | |
| Total | |

### Industrial Applicability

The invention significantly reduces the time required to dissolve xanthan gum and also enables the dissolving process, which would otherwise require a skill in the prior art, at home or the like, without requiring any special technique or equipment.

### Brief Description of Drawing

Fig. 1 is a graph showing viscosity achievement rates.

## Claims

1. A thickening composition, comprising a xanthan gum powder and a potassium, salt binding to the surface of the xanthan gum powder, wherein 0,5 to 7 parts by weight of the potassium salt binds to 100 parts by weight of the xanthan gum, wherein when the coated xanthan gum particules are subjected to a 30-second vibration in a 60-mesh JIS standard sieve having an inner diameter of 150mm at a vibration width of 2 to 3 mm and 3600 counts/min, 20% by weight or less of the coasted xanthan gum particles crushed by vibration pass through the sieve; and wherein the xanthan gum particules prior to potassium salt coating have a particle size finer than 60-mesh

2. The thickening composition according to Claim 1, wherein the binding is achieved by a method that comprises spraying a potassium salt solution on the xanthan gum and then subjecting it to fluidized drying.

3. The thickening composition according to any one of Claims 1 to 2, wherein two minutes after one part by weight of the potassium salt-binding xanthan gum according to any one of Claims 1 to 3 is added to 99 parts by weight of ion exchanged water at 20 deg. C, the potassium salt-binding xanthan gum is dispersed and dissolved and achieves at least 90% of its peak viscosity without forming aggregates.

4. A food product, comprising the thickening composition according to any one of Claims 1 to 3.

5. Use of a composition comprising xanthan gum powder and a potassium salt binding to the surface of the xanthan gum powder according to claim 1, as a thickening composition,

6. The use according to claim 5, wherein two minutes after one part by weight of the potassium salt-binding xanthan gum is dispersed and dissolved and achieves at least 90% of its peak viscosity without forming aggregates.

## Patentansprüche

1. Verdickungszusammensetzung, umfassend ein Xanthangummipulver und ein Kaliumsalz, das an die Oberfläche des Xanthangummipulvers bindet, wobei 0.5 bis 7 Gewichtsteile des Kaliumsalzes an 100 Gewichtsteile des Xanthangummis binden, wobei, wenn die beschichteten Xanthangummiteilchen einer 30-Sekunden-Vibration in einem 60- Mesh-JIS-Standardsieb mit einem Innendurchmesser von 150 mm bei einer Vibrationsbreite von 2 bis 3 mm und 3600/min unterworfen werden, 20 Gew.% oder weniger der beschichteten und durch Vibration zerkleinerten Xanthangummiteilchen das Sieb passieren; und wobei die Xanthangummiteilchen vor der Kaliumsalzbeschichtung eine Teilchengröße von feiner als 60 Mesh aufweisen.

2. Verdickungszusammensetzung nach Anspruch 1, wobei das Binden durch ein Verfahren erreicht wird, das das Aufsprühen einer Kaliumsalzlösung auf den Xanthangummi und das anschließende Durchführen einer Fließbetttrocknung der Kaliumsalzlösung umfasst.

3. Verdickungszusammensetzung nach einem der Ansprüche 1 bis 2, wobei zwei Minuten, nachdem 1 Gewichtsteil des Kaliumsalz bindenden Xanthangummis nach einem der Ansprüche 1 bis 3 zu 99 Gewichtsteilen ionenausgetauschtem Wasser bei 20 °C zugefügt wird, der Kaliumsalz bindende Xanthangummi dispergiert und gelöst ist und mindestens 90 % seiner Peak-Viskosität ohne Bildung von Aggregaten erreicht.

4. Nahrungsmittelprodukt, umfassend die Verdickungszusammensetzung nach einem der Ansprüche 1 bis 3.

5. Verwendung einer Zusammensetzung umfassend ein Xanthangummipulver und ein Kaliumsalz, das an die Oberfläche des Xanthangummipulvers nach Anspruch 1 bindet, als Verdickungszusammensetzung.

6. Verwendung nach Anspruch 5, wobei zwei Minuten, nachdem 1 Gewichtsteil des Kaliumsalz bindenden Xanthangummis dispergiert und gelöst ist, dieser mindestens 90 % seiner Peak-Viskosität ohne Bilden von Aggregaten erreicht.

## Revendications

1. Composition épaississante, comprenant une poudre de gomme de xanthane et un sel de potassium se liant à la surface de la poudre de gomme de xanthane, dans laquelle 0,5 à 7 parties en poids du sel de potassium se lient à 100 parties en poids de la gomme de xanthane, dans laquelle lorsque les particules de gomme de xanthane revêtues sont soumises à une vibration de 30 secondes dans un tamis normalisé JIS de 60 mesh possédant un diamètre interne de 150 mm à une largeur de vibration de 2 à 3 mm et 3600 nombre/min, 20 % en poids ou moins des particules de gomme de xanthane revêtues concassées par vibration passent à travers le tamis : et dans laquelle les particules de gomme de xanthane avant revêtement par sel de potassium ont une taille de particules plus fine que 60 mesh.

2. Composition épaississante selon la revendication 1, dans laquelle la liaison est réalisée par un procédé qui comprend la pulvérisation d'une solution de sel de potassium sur la gomme de xanthane puis sa soumission à un séchage fluidisé.

3. Composition épaississante selon l'une quelconque des revendications 1 à 2, dans laquelle deux minutes après qu'une partie en poids de la gomme de xanthane se liant au sel de potassium selon l'une quelconque des revendications 1 à 3 est ajoutée à 99 parties en poids d'eau ayant subi un échange d'ions à 20 degrés C, la gomme de xanthane se liant au sel de potassium est dispersée et dissoute et atteint au moins 90 % de sa viscosité maximale sans former d'agrégats.

4. Produit alimentaire, comprenant la composition épaississante selon l'une quelconque des revendications 1 à 3.

5. Utilisation d'une composition comprenant une poudre de gomme de xanthane et un sel de potassium se liant à la surface de la poudre de gomme de xanthane selon la revendication 1, en tant que composition épaississante.

6. Utilisation selon la revendication 5, dans laquelle deux minutes après qu'une partie en poids de la gomme de xanthane se liant au sel de potassium est dispersée et dissoute, elle atteint au moins 90 % de sa viscosité maximale sans former d'agrégats.
